# EUROPEAN PATENT APPLICATION

(11) **EP 4 379 370 A1**
(43) Date of publication of application: **05.06.2024**
(21) Application number: 22210674.2
(22) Date of filing: 30.11.2022
(51) Int. Cl.: G01N 30/32, F04F 5/16, B01F 25/312, G01N 30/02, G01N 30/88

(54) **GAS CHROMATOGRAPH AND GAS CHROMATOGRAPHIC SYSTEM HAVING AN EJECTOR PUMP AND OPERATING METHOD**

(71) Applicant: Koninklijke Philips N.V., 5656 AG Eindhoven (NL)
(72) Inventor: DIRKSEN, Peter, 5656AG Eindhoven (NL); HAARTSEN, Jaap Roger, 5656AG Eindhoven (NL); KLOOTWIJK, Johan Hendrik, 5656AG Eindhoven (NL)
(74) Representative: Philips Intellectual Property & Standards

(57) **Abstract**

The invention relates to a gas chromatograph 100 for detecting volatile organic compounds and to a gas chromatographic system having the same, wherein the gas chromatograph 100 comprises a pre-concentrator 120 for concentrating an analyte 320, a column 140 equipped with a stationary phase 141 for receiving analyte 320 and a gas detector 150 for detecting volatile organic compounds separated by the column 140. The invention suggests an ejector pump 130 having a motive inlet 131 receiving the carrier gas 310, a suction inlet 132 receiving the analyte 320 and an outlet 133 for providing analyte 320 to the column 140, wherein the ejector pump 130 is configured to accelerate the carrier gas 310 in transport direction T for carrying the analyte 320 in the transport direction T. The invention further relates to an operating method for such a gas chromatographic system.

## Description

### FIELD OF THE INVENTION

The invention relates to a gas chromatograph for detecting volatile organic compounds in an analyte. Further, the invention relates to a gas chromatographic system having a gas chromatograph, and to a method for operating such a gas chromatographic system.

### BACKGROUND OF THE INVENTION

Gas chromatographs usually have a column and a detector for the separation and identification of different components in an analyte, such as volatile organic compounds. Analytes passing through the column coated with a layer employed as stationary phase are separated into their components and detected as a function of time. For carrying the analytes through the column, a flow of a carrier gas employed as the mobile phase is provided and controlled by means of gas valves and pumps. In order to reduce complexity, valveless gas chromatographs have been developed, as described in "A fully electronic microfabricated gas chromatograph with complementary capacitive detectors for indoor pollutants", Yutao Qin and Yogesh B Gianchandani, published in Microsystems & Nanoengineering (2016) 2, 15049. In detail, a micro gas chromatograph having a Knudsen pump is disclosed, in which gas flows from a cold side to a hot side via small gas channels when a temperature gradient is established. The volume flow is thus limited by the thermal gradient resulting in a volume flow of less than 0,5 sscm. Further, at least a minimum temperature difference has to be maintained permanently resulting in continuous energy consumption. When considering the optimal operation velocity of hydrogen as a carrier gas is 40 cm/sec, Knudsen pumps provide an insufficient volume flow. They are further limited with regard to an automated high volume production.

### SUMMARY OF THE INVENTION

It is an object of the present invention to propose a concept of a pump for a gas chromatograph or a gas chromatographic system having the latter that allows sufficient volume flow and high volume production.

In a first aspect of the invention, a gas chromatograph for detecting volatile organic compounds is presented. The gas chromatograph comprises a pre-concentrator configured to concentrate and desorb an analyte comprising volatile organic compounds, a column being equipped with a stationary phase, and being configured to receive the pre-concentrated analyte carried by a carrier gas, a gas detector configured to detect the volatile organic compounds separated by the column and an ejector pump configured to provide a flow of carrier gas for carrying the analyte in a transport direction. The ejector pump has a motive inlet for receiving the carrier gas, a suction inlet for receiving the analyte and an outlet for providing analyte carried by the carrier gas in the transport direction. The ejector pump is configured to accelerate the carrier gas in transport direction thereby carrying the analyte towards the outlet in the transport direction.

The ejector pump in particular refers to an air ejector pump also called ejector, venturi pump or jet pump. Since the ejector pump does not require any valves or moving parts in general, in order to accelerate the gas flow passing there through, a more compact and robust arrangement is provided that can allows to be micro-scaled to fit for example for a micro gas chromatograph. The motive inlet of such an ejector pump can be easily connected to a carrier gas container for receiving the carrier gas. The carrier gas is preferably an inert gas as for example H₂. It shall be understood that the carrier gas is preferably pressurized having a pressure above atmospheric pressure when provided when entering the motive inlet. Thus, the carrier gas has a comparatively high velocity compared to the carrier gas provided via the suction inlet. Due to the different velocities, a pressure difference occurs within the ejector pump, resulting in a force drawing the analyte into the ejector pump.

It shall be understood, that the gas chromatograph may comprise one or more columns, ejector pumps, pre-concentrators or carrier gas containers.

Preferentially, the gas chromatograph is a micro gas chromatograph. Micro gas chromatography is performed on a micro gas chromatograph to increase portability, decrease power consumption, and increase the speed of analysis. In that regard, the term "micro gas chromatograph" refers herein to any field portable versions of a gas chromatograph comprising one or more microfabricated components. Since valves and moving part can be avoided with the ejector pump described above, such a pump is in particular advantageous for micro gas chromatographs.

Preferably, the ejector pump first narrows and then expands a cross-sectional area through which the carrier gas flows. Thereby, in line with Bernoulli's principle, a low pressure occurs, thus generating a pressure difference within the ejector pump that suctions the analyte into the pump. Due to the pressure difference, the analyte is drawn into the ejector pump and mixes with the carrier gas to form a blend of analyte and carrier gas. After the narrowing section of the ejector pump, the ejector pump typically expands thereby decreasing the velocity of the carrier gas carrying the analyte. Thereby, a steady gas flow through the subsequent system components is provided.

Preferably, the ejector pump comprises a suction chamber coupled to the suction inlet and a motive nozzle exiting in the suction chamber and being coupled to the motive inlet. The motive nozzle is configured to accelerate the carrier gas. Since the motive nozzle exits in the suction chamber, the analyte is drawn via the suction inlet into the suction chamber due to the pressure difference and difference in velocity caused by the acceleration of the carrier gas. The suction chamber allows a higher amount of analyte to distribute around the motive nozzle thereby providing an equal distribution of analyte in the blend.

Preferably, the motive nozzle has as distal end extending at least partly in the transport direction. The distal end allows the carrier gas to exit the nozzle already in the transport direction and accelerates the carrier gas in the transport direction accordingly. Thereby a more efficient and easy controllable gas flow is provided.

In a preferred embodiment, the gas chromatograph further comprises a converging inlet nozzle for converging the analyte and an outlet diffuser for diffusing mixed carrier gas and analyte defining a blend. The converging inlet nozzle meets the outlet diffuser at a throat. In the converging inlet nozzle, the analyte and preferably also the carrier gas is converged and thus accelerated, whereby the pressure inside the ejector pump increases. After passing the throat, the blend comprising carrier gas and analyte diverges and expands thereby decreasing the velocity. In the region of the throat, a maximum velocity of the analyte and the carrier gas can be observed allowing an improved mixture of both components.

It is further preferred that the arrangement of the motive nozzle is defined in that the motive nozzle exits proximal to the throat. By exiting proximal to the throat, the high-pressure carrier gas exits the motive nozzle in the region of the ejector pump having a minimum cross section and thus resulting in an increased acceleration of the surrounding analyte in this area. The acceleration of the surrounding analyte results in a pressure difference as described above.

Preferably, the arrangement of the motive nozzle is defined in that the distal end of the motive nozzle and the suction chamber are arranged coaxially. Thus, the analyte received in the suction chamber evenly surrounds the motive nozzle thereby allowing a more equal distribution of the analyte when blended with the carrier gas.

It is further preferred that the arrangement of the motive nozzle is defined in that the motive nozzle at least partly extends through the suction chamber. Since the nozzle extends through the suction chamber, a more compact arrangement of the ejector pump is provided thereby allowing a decreased size of the whole gas chromatograph.

Preferably, the converging inlet nozzle at least partly defines the suction chamber. Thereby, a function integration is provided, wherein the converging inlet nozzle on the one hand compresses the gas flow in the transport direction and on the other hand provides a sufficient space for receiving the analyte that is intended to be accelerated by the carrier gas exiting the motive nozzle.

According to a preferred embodiment, the ejector pump is arranged downstream of the column in the transport direction. The ejector pump has the suction inlet coupled to the column for receiving the analyte with the separated volatile organic compounds and the outlet coupled to the detector, wherein the ejector pump is configured to draw the analyte from the column, in particular into the suction chamber, by a pressure difference generated by the accelerated carrier gas. In the ejector pump, the carrier gas is accelerated in the motive nozzle thereby generating the pressure difference to draw the analyte into the ejector pump. Thus, the analyte is advanced in the transport direction when passing the pre-concentrator and the column. Thus, a high concentration of analyte is provided in the column. In the ejector pump, the analyte is mixed with the carrier gas and the mixture is provided to the detector via the outlet.

According to another preferred embodiment, the ejector pump is arranged downstream of the pre-concentrator and upstream of the column in the transport direction. The ejector pump has the suction inlet coupled to pre-concentrator for receiving the pre-concentrated analyte and the outlet coupled to the column, wherein the ejector pump is configured to draw the analyte from the pre-concentrator, in particular into the suction chamber, by a pressure difference generated by the accelerated the carrier gas. The motive inlet is configured to be coupled to a carrier gas container storing pressurized carrier gas. The pressurized carrier gas is provided to the ejector pump with a defined velocity depending on the pressure in the carrier gas container. In the ejector pump, the carrier gas is accelerated in the motive nozzle thereby generating the pressure difference in the suction chamber drawing the analyte that is pre-concentrated in the pre-concentrator into the ejector pump. In the ejector pump, the analyte is mixed with the carrier gas and the mixture is provided to the column via the outlet. By drawing the analyte into the ejector pump, the analyte is already advanced in the transport direction when passing the pre-concentrator.

According to another preferred embodiment, the ejector pump is arranged upstream of the pre-concentrator in the transport direction. The ejector pump has the suction inlet coupled to an inlet of the gas chromatograph for receiving the analyte and the outlet coupled to the pre-concentrator for providing analyte collected by the carrier gas to the pre-concentrator. Thus, the amount of oxygen can be significantly reduced or completely avoided. Since oxygen is inflammable due to high temperatures, e.g. caused by the pre-concentrator heater and the column heater, avoiding oxygen on the one hand reduces risk of damage of the column and in particular the stationary phase. On the other hand, avoiding oxygen generally increases safety of the gas chromatograph by reducing the risk of fire.

According to another preferred embodiment, the ejector pump is a first ejector pump arranged downstream of the pre-concentrator in the transport direction. The suction inlet is a first suction inlet of the first ejector pump coupled to pre-concentrator for receiving the pre-concentrated analyte and the outlet is a first outlet coupled to the column. The first ejector pump is configured to draw the analyte from the pre-concentrator by a pressure difference generated by the accelerated the carrier gas thereby generating a flow in the transport direction. The gas chromatograph further has a second ejector pump arranged upstream of the pre-concentrator in the transport direction. The second ejector pump has a second motive inlet for receiving the carrier gas, a second suction inlet coupled to the pre-concentrator and a second outlet coupled to an or the inlet of the gas chromatograph. The second ejector pump is configured to draw the analyte from the pre-concentrator by a pressure difference generated by the accelerated the carrier gas thereby generating a reverse flow opposite the transport direction. Thus, a reverse flow can be generated that may be necessary between sampling and separation intervals or for cleaning purposes.

Preferably, the motive nozzle has a diameter varying in the transport direction from a maximum diameter to a minimum diameter, wherein the minimum diameter is provided at the distal end. The minimum diameter is preferably in a range from 10 µm to 100 µm, in particular 40 µm, and the maximum diameter of the motive nozzle is in a range from 100 µm to 500 µm. Thus, the motive nozzle narrows sufficiently to increase the velocity of the carrier gas thereby enabling an acceleration of the carrier gas causing a difference in pressure and velocity of the carrier gas and the analyte in the suction chamber that draws the analyte into the suction chamber and further into a mixing space proximal to the throat.

It is further preferred that the throat has a throat diameter that is in a range of 50 µm to 300 µm. Thus, the mixing space surrounding the motive nozzle exit is sufficiently narrowed that all the analyte received in the respective area is drawn from the pressure difference occurring due to the acceleration of the carrier gas and mixed with the carrier gas without remaining analyte in the respective area. Preferentially, the throat has a throat length that is in a range of 50 µm to 1000 µm.

It is further preferred that the outlet diffuser extends in an extension angle relative to the transport direction. The extension angle is preferably chosen in accordance with the viscosity or the Reynolds number of the analyte and/or the carrier gas. In case of having air serving as a carrier gas and for pre-concentrating the VOCs the Reynolds number in the outlet diffusor is typically around 400. In case of having hydrogen serving as a carrier gas and for pre-concentrating the VOCs the Reynolds number in the outlet diffusor is typically around 700. In case of having air or hydrogen serving as a carrier gas, the extension angle is preferably 20° or less. An extension angle of preferably 20° or less enables reduction of pressure drops in case of having air or hydrogen serving as a carrier gas. In case of having a carrier gas with a density above 1.5 kg/m3 and/or a viscosity above 20 µPa·s resulting in a Reynolds number less than 400, the extension angle is preferably at least 20°, in particular in a range of 20° to 90°. Thus, a sufficient mixing of the carrier gas and the analyte is enabled, even when having analyte and/or carrier gas with a high viscosity.

In a further preferred embodiment, the ejector pump has an enclosure defining the converging inlet nozzle, the outlet diffuser and the throat, wherein the enclosure has a number of vanes arranged proximal to the throat. In general, pressure losses in the ejector pump occur due to friction and momentum exchanges resulting from a change in the direction of flow due to the shape of the converging inlet nozzle, the outlet diffuser and the throat. Both these factors depend on the bend angle, the curvature ratio and the Reynolds Number. Moreover, the analyte and the carrier gas have a very high velocity in the region of the distal end of the nozzle and throat causing turbulences. In bends, especially in the case of turbulent flows, the losses are significant when comparing to the losses in straight parts of the pipes, e.g. losses due to friction. The viscous interaction between fluid layers is more in bends due to the presence of flow separation secondary swirling motion. The inventors recognized that a reduction in these interactions can be achieved by installing vanes, in particular elevations inside the injector pump in the region of maximum velocity, namely proximal to the distal end of the motive nozzle and the throat. Due to the vanes, a uniform stream-wise velocity distribution downstream throat is provided, which reduces cross-stream velocities, and significantly reduces pressure losses. Thereby, a more even distribution of the analyte in the carrier gas in enabled. Preferably, the vanes are formed integral with the ejector pump.

It is preferred, that the enclosure has a flow cross section in the area of the vanes having a flow diameter, wherein the vanes have a length the order of the flow diameter. Thus, the length preferably corresponds to the flow diameter in that the length e.g. equals the flow diameter. Preferentially, the flow diameter and the length are in a range from 40 µm to 400 µm. Preferentially, the vanes are defined by elevations configured to guide at least a part of the flow around the latter. It is further preferred, that the vanes, in particular the elevations are airfoil-shaped. By having airfoil-shaped vanes, flow resistance is further reduces. Preferably, the injector pump has at least one vane and a maximum number of four vanes.

In a further preferred embodiment, the pre-concentrator, the column, the gas detector and the ejector pump are associated to a common structure, in particular a wafer structure. Thus, a more compact and easy to handle arrangement of the gas chromatograph is provided. Preferably, the common structure comprises one or more silicon wafer.

According to a preferred embodiment, the ejector pump and/or the pre-concentrator and/or the column are integral formed with the structure. The ejector pump within the structure is preferably formed by a subtractive manufacturing process. Subtractive manufacturing processes in the present application refer to controlled machining and material removal processes that start with solid blocks, bars, rods of plastic, metal, or other materials that are shaped by removing material through cutting, boring, drilling, in particular laser drilling, grinding and chemical material removal, in particular etching. Thus, the ejector pump formed in a silicon wafer allows an automated manufacturing and thus an efficient high volume production.

Preferably, the carrier structure including the ejector pump and preferably one, more or all of, the pre-concentrator and the column is formed by the steps:
- depositing or thermally growing an oxide layer onto an un-patterned silicon wafer,
- spin coating of a photoresist layer onto the un-patterned silicon wafer,
- exposing the coated silicon wafer to a pattern of intense light defining a lateral dimensions of the carrier structure by photolithography to structure the oxide layer thereby forming a hard mask partly covering the silicon wafer,
- etching of the silicon wafer, in particular Reactive Ion etching, wherein a region of the carrier part not covered with the hard mask is removed to create the ejector pump and preferably one, more or all of the pre-concentrator and the column within the silicon wafer.

The deposition of the oxide layer is preferably executed by physical vapor deposition (PVD), chemical vapor deposition (CVD), Atomic Layer Deposition (ALD) or plasma-enhanced chemical vapor deposition (PECVD). Physical vapor deposition (PVD), sometimes called physical vapor transport (PVT), describes a variety of vacuum deposition methods which can be used to produce thin films and coatings on substrates including metals, ceramics, glass, and polymers. PVD is characterized by a process in which the material transitions from a condensed phase to a vapor phase and then back to a thin film condensed phase. Chemical vapor deposition (CVD) is a vacuum deposition method used to produce high quality, and high-performance, solid materials. Plasma-enhanced chemical vapor deposition (PECVD) is a chemical vapor deposition process used to deposit thin films from a gas state (vapor) to a solid state on a substrate. Chemical reactions are involved in the process, which occur after creation of a plasma of the reacting gases. The structure one, more or all of the ejector pump, the pre-concentrator and the column is formed by photolithography including at least the spin coating, the exposing and the etching step. Photolithography is a general term used for techniques that use light to produce minutely patterned thin films of suitable materials over a substrate, such as a silicon wafer, to protect selected areas of it. The exposure to light causes a chemical change that allows some of the photoresist to be removed by a special solution, called "developer" by analogy with photographic developer. Positive photoresist, the most common type, becomes soluble in the developer when exposed; with negative photoresist, unexposed regions are soluble in the developer. In etching, a liquid ("wet") or plasma ("dry") chemical agent removes the uppermost layer of the substrate in the areas that are not protected by photoresist. A suitable method is the so called reactive-ion etching (RIE).

According to another preferred embodiment, the structure has a top surface to which the components of the gas chromatograph are attached or in which the components of the gas chromatograph are integrally formed, wherein the top surface has a size of less than 10 cm², preferably a size of 4 cm² or less.

It is further preferred that the pre-concentrator is a first pre-concentrator and the gas chromatograph has a second pre-concentrator. Preferentially, the suction inlet is a first suction inlet in fluid connection with the first pre-concentrator, wherein the ejector pump has a second suction inlet in fluid connection with the second inlet. Thus, the analyte can more evenly be guided into the ejector pump and the first and second pre-concentrator can be evenly arranged around the ejector pump depending on the provided working area. The first pre-concentrator may be in fluid communication via a directly coupled to the first suction inlet in case the ejector pump is arranged between the first pre-concentrator and the column. In the alternative, the first pre-concentrator is in fluid communication with the first suction inlet via the column in case the ejector pump is arranged downstream the column. Preferably, the column is a first column in fluid communication with the first suction inlet and the first pre-concentrator and the gas chromatograph further has a second column in fluid communication with the second suction inlet and the second pre-concentrator. Thus, two separate flow paths for pre-concentrating and separating the analyte are provided allowing analysis of different analytes.

It shall be understood, that a pre-concentrator, in particular a micro-pre-concentrator is one of the key components in micro gas chromatograph and configured for increasing the concentration of an analyte before detection by using high surface-area adsorbents and rapid thermal desorption of the trapped analytes. Thus, pre-concentrators are used when a concentration of the target analyte is too low and below the detection limit of a detector. It shall be understood, that in the first and second pre-concentrator either the same or different high surface-area adsorbents with rapid thermal desorption are used.

Preferably, the ejector pump is a first ejector pump and the carrier gas container is a first carrier gas container coupled to the first ejector pump, wherein the gas chromatograph further has a second ejector pump. Preferably, the carrier gas container is a first carrier gas container coupled to the first ejector pump or to the first pre-concentrator, wherein and a second gas container, in particular a second carrier gas container, is coupled to the second ejector pump. In an alternative embodiment, the first ejector pump and the second ejector pump are both coupled to a single carrier gas container. Thus, two separate flow paths are provided each comprising a carrier gas container, a pre-concentrator, an ejector pump and a column allowing a separated transport and separation of an analyte that is provided to the detector for detecting the volatile organic compounds in the analyte.

It shall be understood, that in the first carrier gas container and second gas container are either both configured for storing and providing carrier gas or in the alternative the first carrier gas container is configured for storing and providing carrier gas and the second gas container is a calibration gas container configured for storing and providing a calibration gas configured to allow detection of volatile organic compounds in a calibration analyte having a predefined mixture of said volatile organic compounds. Thus, reference data is provided allowing a verification of the results from the gas chromatograph.

It is further preferred, that the carrier gas container is a metal hydride carrier gas container configured to store hydrogen serving as a carrier gas in a solid state.

In a further aspect of the present invention, a gas chromatographic system for detecting volatile organic compounds is presented. The system comprises a carrier gas container for providing a carrier gas, a gas chromatograph according to the first aspect of the invention and a control unit being in signal communication with the detector for receiving raw data about the volatile organic compounds. The motive inlet of the ejector pump is coupled to the carrier gas container for receiving the carrier gas. By having such a gas chromatograph, the gas chromatographic system has the same benefits as described with respect to the first aspect of the present invention.

Preferably, the gas chromatograph has one or more heaters configured to heat either one or both of the pre-concentrator and the column. The carrier gas container has a container heater. The control unit is configured to control one, more or all of the heaters of the gas chromatograph and the container heater. It shall be understood that the control unit may either be wirelessly connected to the heaters and the detector or being coupled via a cable connection to the heaters or the detector. By having the control unit also controlling the heaters, a more compact arrangement of the gas chromatographic system is provided due to the function integration.

It is further preferred that the carrier gas container is further coupled to an inlet port of the pre-concentrator for providing a flow of carrier gas.

The flow of carrier gas can be used for desorbing the volatile organic compounds in the pre-concentrator thereby providing a gas flow of analyte comprising said volatile organic compounds. Preferably, the connection of the inlet port of the pre-concentrator and the carrier gas container is provided by a bypass. Thus, the concentration of oxygen in the gas chromatograph is reduces by having the carrier gas, for example air or nobel gasses including e.g. hydrogen, nitrogen and helium, assisting to pre-concentrate the analyte in the pre-concentrator. Since oxygen is inflammable due to high temperatures, e.g. caused by the pre-concentrator heater and the column heater, avoiding oxygen on the one hand reduces risk of damage of the column and in particular the stationary phase. On the other hand, avoiding oxygen generally increases safety of the gas chromatograph by reducing the risk of fire.

In a further aspect of the present invention, a method for operating a gas chromatographic system, in particular a gas chromatographic system according to the second aspect of the invention is presented. The method comprises the steps:
- providing a carrier gas at a motive inlet of an ejector pump,
- providing analyte at a suction inlet of the ejector pump,
- concentrating an analyte comprising volatile organic compounds in a pre-concentrator,
- accelerating the carrier gas in transport direction T thereby advancing movement of the analyte in the transport direction,
- guiding the pre-concentrated analyte through a column being equipped with a stationary phase in the transport direction,
- carrying the analyte carried by the carrier gas through a gas detector, and
- detecting the volatile organic compounds separated by the column by the gas detector.

It shall be understood that the gas chromatograph of claim 1, the gas chromatographic system of claim 12 and the method of claim 14, have similar and/or identical preferred embodiments, in particular, as defined in the dependent claims.

It shall further be understood, that the invention is not limited to gas chromatographs having the pre-concentrator, the column, the ejector pump and the detector provides as separate units. Instead, also combined units may be used.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a schematic view of a gas chromatographic system according to a first embodiment,
Fig. 2 shows a schematic view of a gas chromatographic system according to a second embodiment,
Fig. 3 shows a schematic view of a gas chromatographic system according to a third embodiment,
Fig. 4 shows a schematic view of a gas chromatographic system according to a fourth embodiment,
Fig. 5 shows a schematic view of a gas chromatographic system according to a fifth embodiment,
Fig. 6 shows a schematic view of a gas chromatographic system according to a sixth embodiment,
Fig. 7 shows a schematic view of a gas chromatographic system according to a seventh embodiment,
Fig. 8a shows a sectional view of an embodiment of an ejector pump for a gas chromatograph,
Fig. 8b shows a sectional view via a first cross section of the ejector pump shown in Fig. 8a,
Fig. 8c shows a sectional view via a second cross section of the ejector pump shown in Fig. 8a, and
Fig. 9 shows a flowchart illustrating an embodiment of a method for operating a gas chromatographic system.

### DETAILED DESCRIPTION OF THE EMBODIMENTS

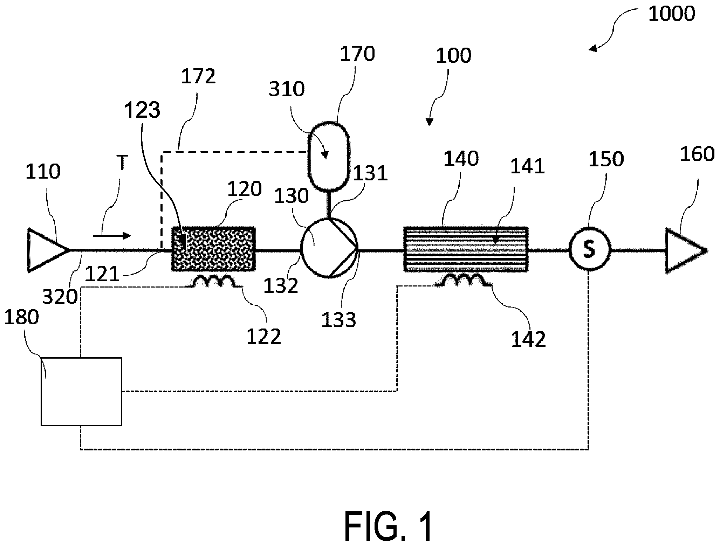

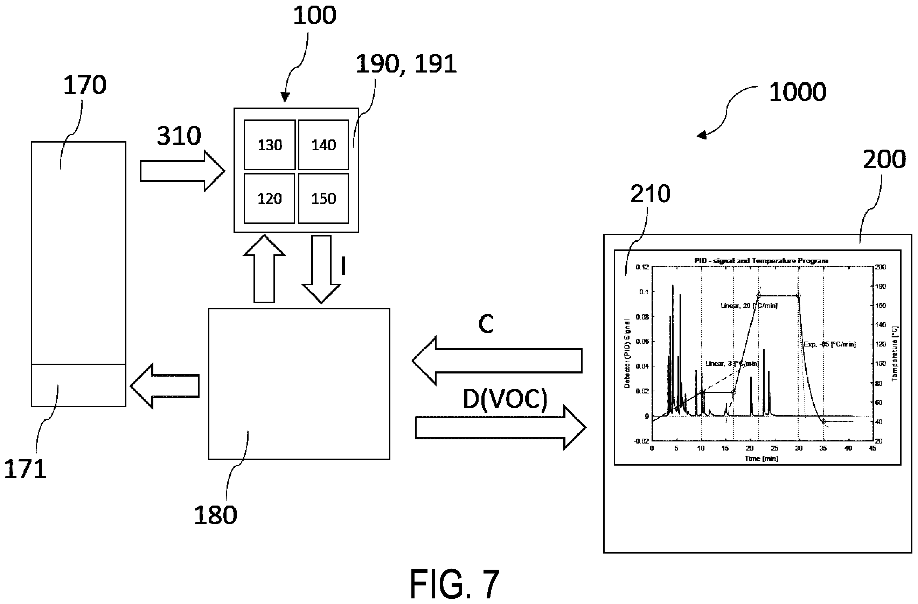

Fig. 1 shows a gas chromatographic system 1000 for detecting volatile organic compounds VOC (cf. Fig. 7). The gas chromatographic system 1000 comprises a carrier gas container 170 for providing a carrier gas 310 and a gas chromatograph 100 coupled to the carrier gas container 170 for receiving the carrier gas 310. The gas chromatographic system 1000 further comprises a control unit 180.

The gas chromatograph 100 has an inlet 110 for injecting an analyte 320 comprising the volatile organic compounds VOC (cf. Fig. 7) and a pre-concentrator 120 to receive, concentrate and desorb the analyte 320. The pre-concentrator 120 has an inlet port 121 coupled to said inlet 110. Preferably, the pre-concentrator 120 is also coupled to the carrier gas container 170 by means of a bypass 172.

The analyte 320 is transported from the inlet 110 to the pre-concentrator 120 in a transport direction T. The pre-concentrator 120 preferably comprises a pre-concentrator heater 122 that is controlled by the control unit 180 and is equipped with a sorbent 123. The gas chromatograph 100 further comprises an ejector pump 130 configured to provide a flow of carrier gas 310 in the transport direction T.

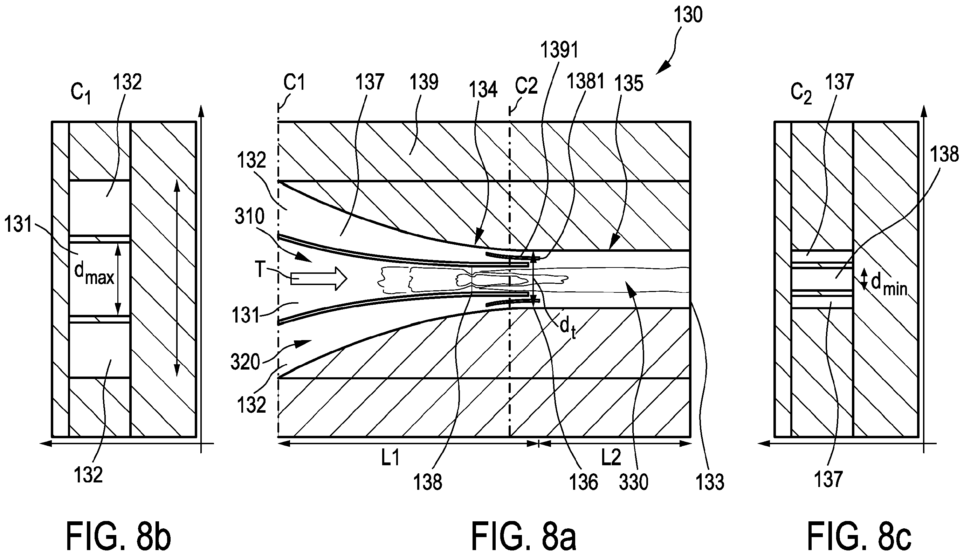

The ejector pump 130 is shown in more detail in Figs. 8a to 8c and in the following also reference is made to Figs. 8a to 8c. The ejector pump 130 has a motive inlet 131 coupled to the carrier gas container 170 for receiving the carrier gas 310. The carrier gas container 170 is preferably a high-pressure carrier gas container. The ejector pump 130 further has a suction inlet 132 coupled to the pre-concentrator 120 to draw analyte 320 from the pre-concentrator 120 into the ejector pump 130 in the transport direction T.

The gas chromatograph 100 further has a column 140 arranged downstream of the ejector pump 130 in the transport direction T. The column 140 is equipped with a stationary phase 141. The column 140 is configured to receive the pre-concentrated analyte 320 carried by the carrier gas 310 that is provided in a constant gas flow advanced by the ejector pump 130. The column 140 further has a column heater 142 that is controlled by the control unit 180. The analytes 320 traversing the column 140 are separated in the column 140 owing to differences in the interactions with the stationary phase 141. The ejector pump 130 further has an outlet 133 coupled to the column 140.

The gas chromatograph 100 further has a detector 150 arranged downstream of the column 140 that is configured to detect or identify the volatile organic compounds VOC separated by the column over time based on the rate at which the volatile organic compounds VOC pass through the column 140. The detector 150 is in signal communication with the control unit 180 and configured to provide raw data I relating to the detected volatile organic compounds VOC (cf. Fig. 7), in particular to passing times. The control unit 180 is configured to process the provided raw data I. The flow of carrier gas 310 and analyte 320 is finally exhausted via an exhaust port 160.

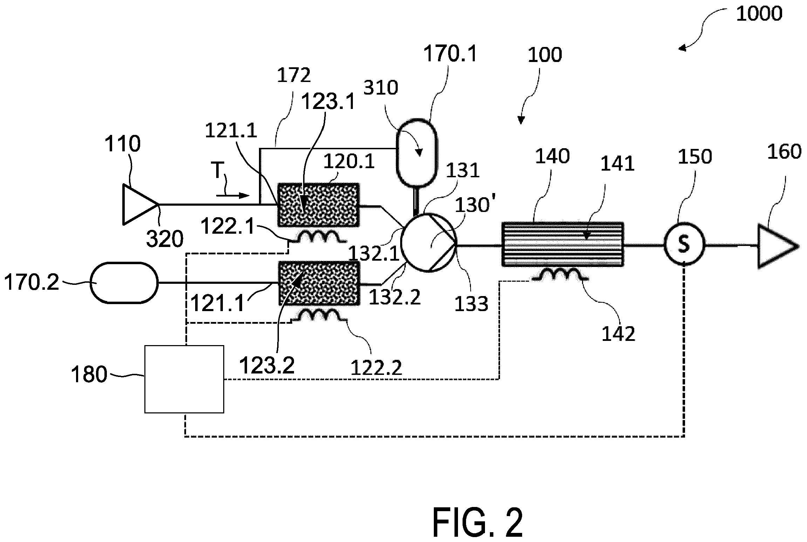

Fig. 2 shows a second embodiment of the gas chromatographic system 1000. Similar parts of the first and second embodiment have identical reference signs and reference is made to the above description of the first embodiment shown in Fig. 1. The embodiment shown in Fig. 2 differs from the first embodiment of the gas chromatographic system 1000 in that the pre-concentrator 120.1 is a first pre-concentrator equipped with a first sorbent 123.1 and having a first inlet port 121.1 and a first pre-concentrator heater 122.1. The first pre-concentrator 120.1 is coupled to a first suction inlet 132.1 of the ejector pump 130' and to the inlet 110 for receiving the analyte 320. The ejector pump 130 further has an outlet 133 coupled to the column 140. The gas chromatograph 100 further comprises a second pre-concentrator 120.2 equipped with a second sorbent 123.2 and having a second inlet port 121.2 and a second pre-concentrator heater 122.2 coupled to a second suction inlet 132.2 of the ejector pump 130'. For example, the first sorbent 123.1 is a polar sorbent and the sorbent 123.2 is a non-polar sorbent.

The gas chromatograph 100 further has the carrier gas container 170.1 coupled to the first pre-concentrator 120.1 via a bypass 172 and a calibration gas container 170.2 coupled to the second pre-concentrator 120.2. Thus, two separate flow paths to the detector 150 are provided, wherein a first flow path is guided via the first pre-concentrator 120.1 and a second flow path is guided via the second pre-concentrator 120.2. By having two pre-concentrators 120.1, 120.2 coupled to separate suction inlets 132.1, 132.2 of the ejector pump 130', analyte 320 is introduced more evenly into the suction chamber 137 (cf. Figs. 8a-8c) of the ejector pump 130'. Accordingly, it is possible to have two columns (not shown) each coupled to a respective one of the first and second pre-concentrators 120.1, 120.2.

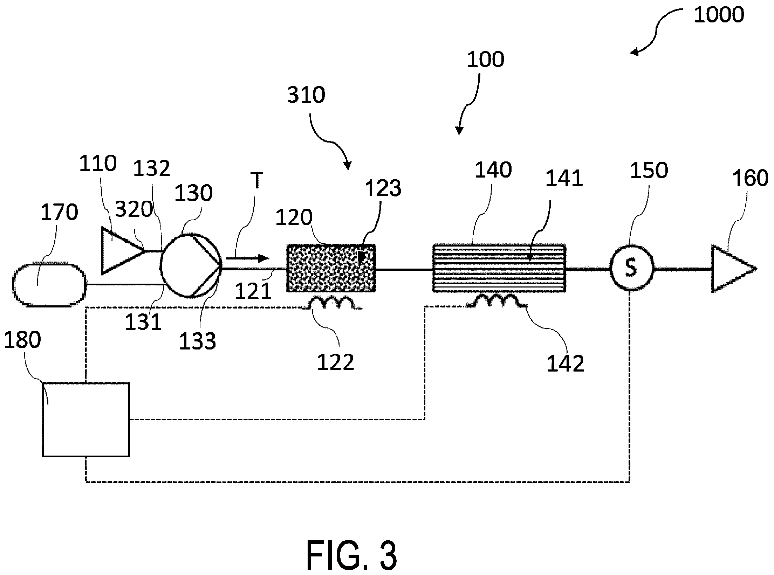

Fig. 3 shows a third embodiment of the gas chromatographic system 1000. Similar parts of the first to third embodiment have identical reference signs and reference is made to the above description of the first embodiment shown in Fig. 1. The embodiment shown in Fig. 3 differs from the first embodiment of the gas chromatographic system 1000 in that the ejector pump 130 is arranged upstream of the pre-concentrator 120 in the transport direction T. The ejector pump 130 has a suction inlet 132 coupled to an inlet 110 for receiving the analyte 320 and an outlet 133 coupled to the pre-concentrator 120 for providing analyte 320 collected by the carrier gas 310 to the pre-concentrator 120. The ejector pump 130 has motive inlet 131 coupled to a carrier gas container 170 storing pressurized carrier gas 310. The pressurized carrier gas 310 is provided to the ejector pump 130 with a defined velocity depending on the pressure in the carrier gas container 170. In the ejector pump 130, the carrier gas 310 is accelerated in the motive nozzle 138 (cf. Figs. 8a-c) thereby generating a pressure difference between the motive nozzle and the suction chamber 137 (cf. Figs. 8a-c) drawing the analyte 320 from the inlet 110 into the ejector pump 130.

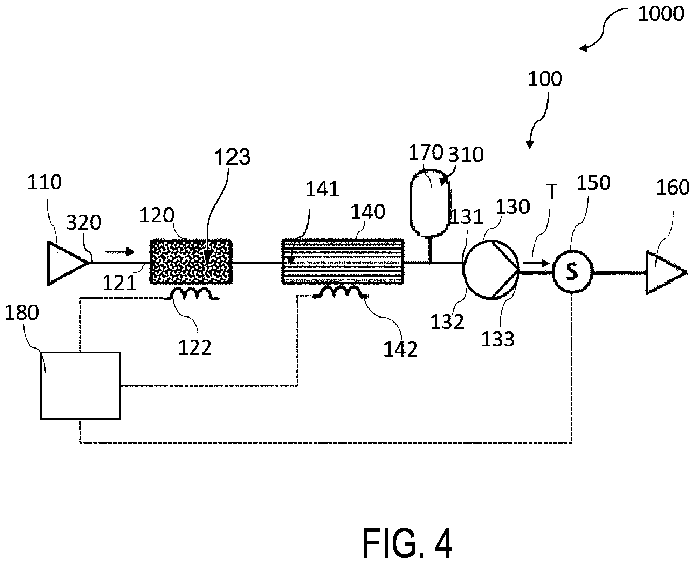

Fig. 4 shows a fourth embodiment of the gas chromatographic system 1000. Similar parts of the first to fourth embodiment have identical reference signs and reference is made to the above description of the first embodiment shown in Fig. 1. The embodiment shown in Fig. 4 differs from the first embodiment of the gas chromatographic system 1000 in that the ejector pump 130 is arranged downstream the column 140 in the transport direction t. The ejector pump 130 has a suction inlet 132 coupled to the column 140 for receiving the analyte 320 with the separated volatile organic compounds VOC (cf. Fig. 7) and an outlet 133 coupled to the detector 150. Further, the ejector pump 130 is configured to draw the analyte 320 from the column 140 into the suction chamber 137 (cf. Figs. 8a-c) by a pressure difference generated by the accelerated the carrier gas 310. In particular, the carrier gas 310 is accelerated in the motive nozzle 138 of the ejector pump 130 (cf. Figs. 8a-c) thereby generating the pressure difference drawing the analyte 320 into the ejector pump 130. Thus, the analyte 320 is advanced in the transport direction T when passing the pre-concentrator 120 and the column 140. Thus, a high concentration of analyte 320 is provided in the column 140. In the ejector pump 130, the analyte 320 is mixed with the carrier gas 310 and the mixture is provided to the detector 150 via the outlet 133.

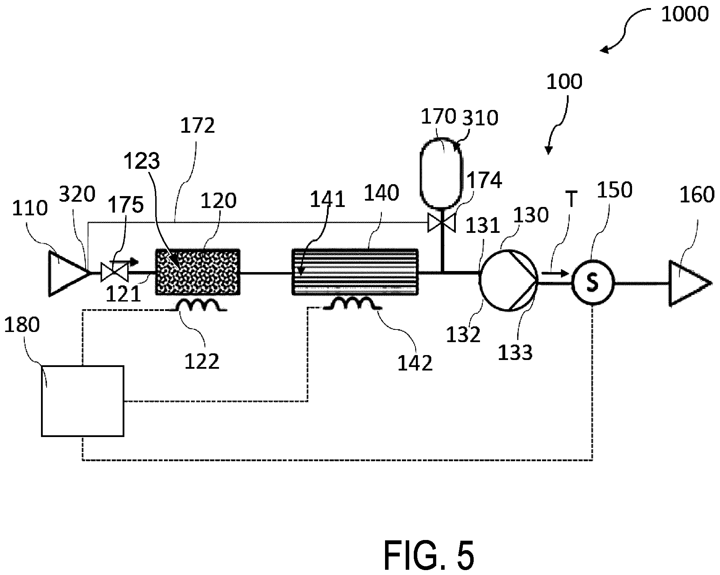

Fig. 5 shows a fifth embodiment of the gas chromatographic system 1000. Similar parts of the first to fifth embodiment have identical reference signs and reference is made to the above description of the fourth embodiment shown in Fig. 4. The embodiment shown in Fig. 5 differs from the fourth embodiment of the gas chromatographic system 1000 in that the ejector pump 130 has a bypass 172 configured to couple the carrier gas container 170 with an inlet port 121 of the pre-concentrator 120. The ejector pump 130 further has a pump valve 174 configured to selectively block a flow path from the carrier gas container 170 to the motive inlet 131 and a pre-concentrator valve 175 configured to selectively block a flow path from the carrier gas container 170 to the inlet port 121. Thus, the pump valve 174 blocks the flow path from the carrier gas container 170 to the motive inlet 131 while the pre-concentrator valve 175 opens the flow path from the carrier gas container 170 to the inlet port 121 to collect the analyte 320 by the carrier gas 310. Afterwards, in order to provide an accelerated flow of carrier gas in the transport direction T, the pump valve 174 opens the flow path from the carrier gas container 170 to the motive inlet 131 while the pre-concentrator valve 175 blocks the flow path from the carrier gas container 170 to the inlet port 121. The outlet 133 is coupled to the detector 150 as described with regard to Fig. 4.

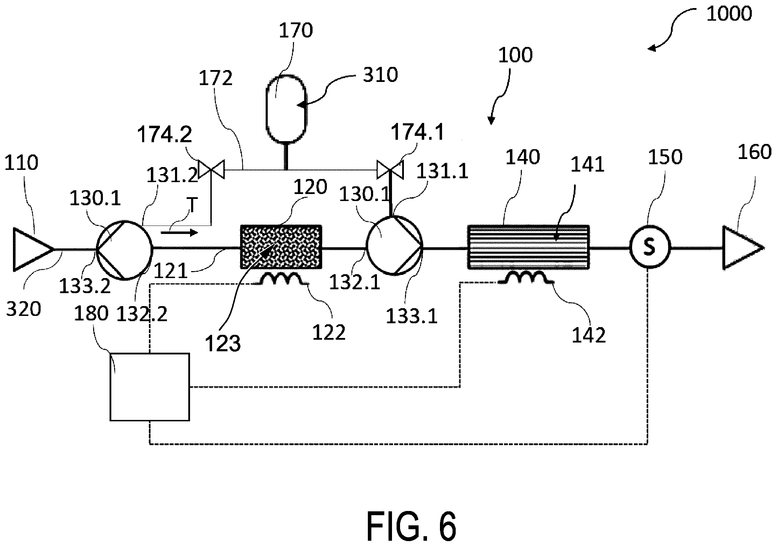

Fig. 6 shows a sixth embodiment of the gas chromatographic system 1000. Similar parts of the first to sixth embodiment have identical reference signs and reference is made to the above description of the first embodiment shown in Fig. 1. The embodiment shown in Fig. 6 differs from the first embodiment of the gas chromatographic system 1000 in that the ejector pump 130 is a first ejector pump 130.1 arranged downstream of the pre-concentrator 120 in the transport direction T and the gas chromatographic system 1000 further has a second ejector pump 130.2 arranged upstream of the pre-concentrator 120 in the transport direction T.

The first ejector pump 130.1 has a first motive inlet 131.1 for receiving the carrier gas 310, a first suction inlet 132.1 coupled to pre-concentrator 120 for receiving the pre-concentrated analyte 320 and a first outlet 133.1 coupled to the column 140. The first ejector pump 130.1 is configured to draw the analyte 320 from the pre-concentrator 120 by a pressure difference generated by the accelerated the carrier gas 310 thereby generating a flow in the transport direction T. The second ejector pump 130.2 has a second motive inlet 131.2 for receiving the carrier gas 310, a second suction inlet 132.2 coupled to the pre-concentrator 120 and a second outlet 133.2 coupled to an inlet 110 of the gas chromatograph 100. The second ejector pump 130.2 is configured to draw the analyte 320 from the pre-concentrator 120 by a pressure difference generated by the accelerated the carrier gas 310 thereby generating a reverse flow opposite the transport direction T. The first ejector pump 130 further has a first pump valve 174.1 configured to selectively block a flow path from the carrier gas container 170 to the first motive inlet 131.1 and the second ejector pump 130 further has a second pump valve 174.2 configured to selectively block a flow path from the carrier gas container 170 to the second motive inlet 131.2.

Fig. 7 shows a seventh embodiment of the gas chromatographic system 1000. Similar parts have identical reference signs and reference is made to the above description of the first to sixth embodiment. The gas chromatographic system 1000 according to the third embodiment has a gas chromatograph 100 with the pre-concentrator 120, the ejector pump 130, the column 140 and the detector 150 arranged on and attached to a common structure 190 that is formed by a silicon wafer 191. The surface of the silicon wafer 191 to which the components of the gas chromatograph 100 are attached preferably has a size of 4 cm x 4 cm or less. The gas chromatograph 100, in particular the ejector pump 130 and preferably the pre-concentrator 120, is or are releasable coupled to the carrier gas container 170. The carrier gas container 170 preferably has a container heater 171 configured to heat the carrier gas container 170.

The control unit 180 is further configured to control the pre-concentrator heater 122 and the column heater 142.

Preferably, the control unit 180 communicates with a processor 200 for transmitting data D relating to the raw data I in order to provide the data to a display device 210 thereby imaging the data D depending on the eluted volatile organic compounds VOC provided by the control unit 180. Preferably, the processor 200 send Control commands C to the control unit 180.

Figs. 8a to 8c show an ejector pump 130 for a gas chromatograph 100 of a gas chromatographic system 1000 according to any of the embodiments shown in Fig. 1 to 7.

The ejector pump 130 comprises a motive inlet 131 configured to receive carrier gas 310 from the carrier gas container 120 (cf. Figs. 1 to 7). The ejector pump 130 further comprises a suction inlet 132 configured to be coupled to a pre-concentrator 120 (cf. Figs. 1 to 7) and an outlet 133 that is configured to be coupled to a column 140 (cf. Figs. 1 to 7).

The ejector pump 130 comprises a converging inlet nozzle 134 for converging the analyte 320 and an outlet diffuser 135 for diffusing a blend 330 comprising carrier gas and analyte.

The carrier gas 310 is guided into the ejector pump 130 and in particular into a motive nozzle 138 via the motive inlet 131 with a predefined velocity depending on the pressure within the carrier gas container 170 (cf. Figs. 1 to 7). Within the ejector pump 130 the carrier gas 310 is further accelerated. As a result, a pressure difference occurs causing the analyte 320 to be drawn into a suction chamber 137 of the ejector pump 130 via the suction inlet 132. In detail, the carrier gas 310 passes the motive nozzle 138 having a distal end 1381 that extends at least partly in the transport direction T. The distal end 1381 of the motive nozzle 138 narrows such that the carrier gas 310 is accelerated within the motive nozzle 138.

The ejector pump 130 has an enclosure 139 comprising a converging inlet nozzle 134 for converging the analyte 320 and an outlet diffuser 135 for diffusing the blend 330 of carrier gas and analyte. The converting inlet nozzle 134 and the outlet diffuser 135 meet each other at a throat 136.

The motive nozzle 138 exits proximal to the throat 136. As such, the motive nozzle 138 at least partly extends through the suction chamber 137 thereby providing a more compact arrangement of the ejector pump 130. A part of the motive nozzle 138 and in particular the distal end 1381 is arranged coaxial with the suction chamber 137 and centered to the transport direction T.

The suction chamber 137 is at least partly defined by the converging inlet nozzle 134, wherein the velocity of the analyte 320 in the region of the converging inlet nozzle 134 is increased compared to the velocity of the analyte 320 within the suction chamber 137 due to the narrowed flow cross section.

The converging inlet nozzle 134 has as first length L1 and the outlet diffuser 135 has a second length L2, wherein the first length L1 is shorter than the second length L2 in the shown embodiment. Thus, a sufficient length for expanding the blend 330 of carrier gas and analyte is provided such that the velocity can smoothly be decreased. Since the velocity is decreased smoothly in the outlet diffuser 135, pressure drops are reduced.

The motive nozzle 138 has a diameter that varies in the transport direction T from a maximum diameter dₘₐₓ that is preferably 200 µm to a minimum diameter dₘᵢₙ is preferably 40 µm. Thus, the diameter of the motive nozzle 138 is sufficiently narrowed to increase the velocity of the carrier gas to provide an appropriate gas flow in the transport direction T.

Preferably, the throat 136 has a throat diameter dₜ that is preferably 40 µm and the maximum motive nozzle diameter dₘₐₓ is preferably 200 µm. Thus, a sufficient space around the distal end 1381 of the motive nozzle 138 is provided for the analyte 320 to be accelerated and drawn in the transport direction T by the vacuum induced the pressure difference due to the acceleration of the carrier gas 310.

It is further preferred that the outlet diffuser 135 extends in an extension angle relative to the transport direction T that is 90° in the shown embodiment.

In some embodiments, the enclosure 139 may have a number of vanes that are defined by elevations 1391 arranged proximal to the distal end 1381 of the motive nozzle 138. In this region, a maximum velocity of the fluid within the ejector pump 130 occurs, wherein the amount of analyte 320 drawn into said region may not be sufficient and thus pressure drops occur. A number of vanes defined by elevations 1391 may be provided to reduce pressure drops and turbulences and are arranged in the region of the throat 136.

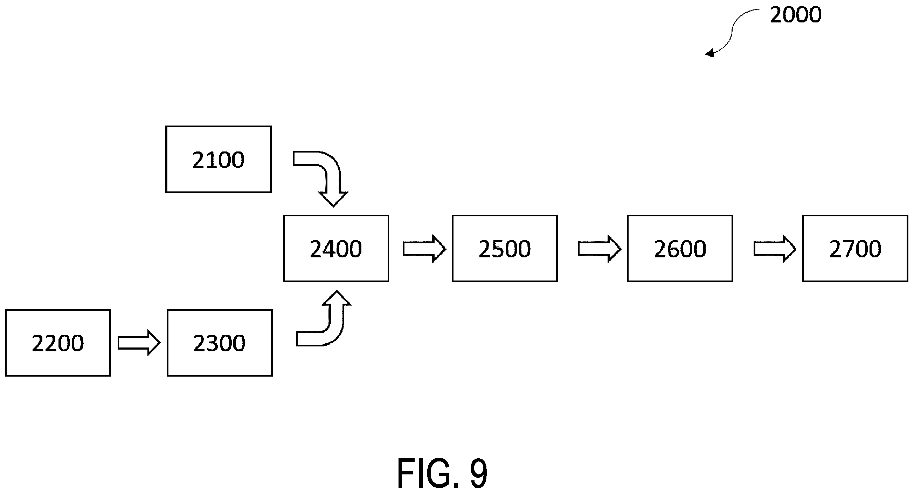

Fig. 9 shows a schematic view of a method 2000 for operating a gas chromatographic system 1000 according to the embodiments shown in Figs. 1 to 7. In a first step 2100, a carrier gas 310 is provided at a motive inlet 131 of an ejector pump 130. In a second step 2200, the method 2000 comprises providing the pre-concentrated analyte 320 at a suction inlet 132 of the ejector pump 130. A third step 2300 comprises concentrating an analyte 320 comprising volatile organic compounds VOC in one or more pre-concentrators 120. In a fourth step 2400, the carrier gas 310 is accelerated in transport direction T thereby advancing movement of the analyte 320 in the transport direction T. Afterwards, in a fifth step 2500, the pre-concentrated analyte 320 is guided through a column 140 being equipped with a stationary phase 141 in the transport direction T. In that regard, the analyte 320 and the carrier gas 310 form a blend or mixture 330 of carrier gas and analyte (cf., Figs. 8a-c).

In a sixth step 2600, the method 2000 comprises carrying the analyte 320 carried by the carrier gas 310 through a gas detector 150. In a last step 2700, the method 2000 comprises detecting the volatile organic compounds VOC separated by the column 140 by the gas detector 150.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage.

Any reference signs in the claims should not be construed as limiting the scope.

The invention relates to a gas chromatograph for detecting volatile organic compounds and to a gas chromatographic system having the same, wherein the gas chromatograph comprises a pre-concentrator for concentrating an analyte, a column equipped with a stationary phase for receiving analyte and a gas detector for detecting volatile organic compounds separated by the column. The invention suggests an ejector pump having a motive inlet receiving the carrier gas, a suction inlet receiving the analyte and an outlet for providing analyte to the column, wherein the ejector pump is configured to accelerate the carrier gas in transport direction for carrying the analyte in the transport direction. The invention further relates to an operating method for such a gas chromatographic system.

## Claims

1. Gas chromatograph (100) for detecting volatile organic compounds (VOC), comprising:
a pre-concentrator (120) configured to concentrate and desorb an analyte (320) comprising volatile organic compounds (VOC);
a column (140) equipped with a stationary phase (141) and being configured separate the volatile organic compounds (VOC) in the pre-concentrated analyte (320);
a gas detector (150) configured to detect the separated volatile organic compounds (VOC) in the analyte (320) carried through the detector (150) by a carrier gas (310); and
an ejector pump (130, 130') configured to accelerate the carrier gas (310) in a transport direction (T), the ejector pump (130, 130') having a motive inlet (131) for receiving the carrier gas (310), a suction inlet (132) for receiving the analyte (320) and an outlet (133) for providing analyte (320) carried by the accelerated carrier gas (310).

2. Gas chromatograph (100) according to claim 1,
wherein the ejector pump (130, 130') comprises a suction chamber (137) coupled to the suction inlet (132), and a motive nozzle (138) coupled to the motive inlet (131) and exiting in the suction chamber (137), wherein the motive nozzle (138) is configured to accelerate the carrier gas (310).

3. Gas chromatograph (100) according to claim 2,
wherein the ejector pump (130, 130') comprises a converging inlet nozzle (134) for converging the analyte (320) and an outlet diffuser (135) for diffusing blended carrier gas and analyte (330), wherein the converging inlet nozzle (134) meets the outlet diffuser (135) at a throat (136).

4. Gas chromatograph (100) according to claim 2 or 3,
wherein the arrangement of the motive nozzle (138) is defined by one, more or all of the following:
- the motive nozzle (138) exits proximal to the throat (136),
- the motive nozzle (138) has a distal end (1381) arranged coaxial with the suction chamber (137),
- the motive nozzle (138) at least party extends through the suction chamber (137).

5. Gas chromatograph (100) according to any of the claims 2 to 4,
wherein the ejector pump (130, 130') is arranged downstream the column (140) in the transport direction (T), the ejector pump (130, 130') having the suction inlet (132) coupled to the column (140) for receiving the analyte (320) with the separated volatile organic compounds (VOC) and the outlet (133) coupled to the detector (150), wherein the ejector pump (130, 130') is configured to draw the analyte (320) from the column (140) into the suction chamber (137) by a pressure difference generated by the accelerated the carrier gas (310).

6. Gas chromatograph (100) according to any of the claims 2 to 4,
wherein the ejector pump (130, 130') is arranged downstream of the pre-concentrator (120) and upstream of the column (140) in the transport direction (T), the ejector pump (130, 130') having the suction inlet (132) coupled to pre-concentrator (120) for receiving the pre-concentrated analyte (320) and the outlet 133 coupled to the column (140), wherein the ejector pump (130, 130') is configured to draw the analyte (320) from the pre-concentrator (120) and into the suction chamber (137) by a pressure difference generated by the accelerated the carrier gas (310).

7. Gas chromatograph (100) according to any of the claims 2 to 4,
wherein the ejector pump (130, 130') is arranged upstream of the pre-concentrator (120) in the transport direction (T), the ejector pump (130, 130') having the suction inlet (132) coupled to an inlet (110) for receiving the analyte (320) and the outlet (133) coupled to the pre-concentrator (120) for providing analyte (320) collected by the carrier gas (310) to the pre-concentrator (120).

8. Gas chromatograph (100) according to any of the claims 2 to 4,
wherein the ejector pump (130) is a first ejector pump (130.1) arranged downstream of the pre-concentrator (120) in the transport direction (T), the first ejector pump (130.1) having the motive inlet (131.1) being a first motive inlet (131.1) for receiving the carrier gas (310), the suction inlet (132) being a first suction inlet (132.1) coupled to pre-concentrator (120) for receiving the pre-concentrated analyte (320) and the outlet (133) being a first outlet (133.1) coupled to the column (140), wherein the first ejector pump (130.1) is configured to draw the analyte (320) from the pre-concentrator (120) by a pressure difference generated by the accelerated the carrier gas (310) thereby generating a flow in the transport direction (T), and
wherein the gas chromatograph (100) further has a second ejector pump (130.2) arranged upstream of the pre-concentrator (120) in the transport direction (T), the second ejector pump (130.2) having a second motive inlet (131.2) for receiving the carrier gas (310), a second suction inlet (132) coupled to the pre-concentrator (120) and a second outlet (133.2) coupled to an inlet (110), wherein the second ejector pump (130.2) is configured to draw the analyte (320) from the pre-concentrator (120) by a pressure difference generated by the accelerated carrier gas (310) thereby generating a reverse flow opposite the transport direction (T).

9. Gas chromatograph (100) according to claim 6,
wherein the pre-concentrator (120.1) is a first pre-concentrator (120.1) and the suction inlet (132.1) is a first suction inlet (132.1) in fluid connection with the first pre-concentrator (120.1), wherein the ejector pump (130') has a second suction inlet (132.2) and the gas chromatograph (100) has a second pre-concentrator (120.2) in fluid connection with coupled to the second suction inlet (132.2).

10. Gas chromatograph (100) according to any of the claims 3 to 9,
wherein the ejector pump (130, 130') has an enclosure (139) defining the converging inlet nozzle (134), the outlet diffuser (135) and the throat (136),
wherein the enclosure (139) has a number of vanes (1391) arranged proximal to the throat (136).

11. Gas chromatograph (100) according to any one of the preceding claims,
wherein one, more or all of the following are integrally formed in a common structure (190): the pre-concentrator (120), the column (140), the gas detector (150) and the ejector pump (130, 130').

12. Gas chromatographic system (1000) for detecting volatile organic compounds (VOC), comprising:
a carrier gas container (170) for providing a carrier gas (310);
a gas chromatograph (100) according to any one of the preceding claims, wherein the motive inlet (131) of the ejector pump (130, 130') is coupled to the carrier gas container (170) for receiving the carrier gas (310), and
a control unit (180) being in signal communication with the detector (150) for receiving raw data (I).

13. Gas chromatographic system (1000) according to claim 12,
wherein the gas chromatograph (100) has one or more first heaters (122, 142) configured to heat the pre-concentrator (120) and the column (140) and the carrier gas container (170) has a second heater (171), and
wherein the control unit (180) is configured to control one, more or all of the first heaters (122, 142) and the second heaters (171).

14. Gas chromatographic system (1000) according to claim 12 or 13,
wherein the carrier gas container (170) is further coupled to an inlet port (121) of the pre-concentrator (120) for providing a flow of carrier gas (310).

15. Method (2000) for operating a gas chromatographic system (1000) (1000), in particular a gas chromatographic system (1000) according to any of the claims 12 to 14, comprising the steps:
- providing (2100) a carrier gas (310) at a motive inlet (131) of an ejector pump (130, 130'),
- providing (2200) an analyte (320) at a suction inlet (132) of the ejector pump (130, 130'),
- concentrating (2300) the analyte (320) comprising volatile organic compounds (VOC) in a pre-concentrator (120),
- accelerating (2400) the carrier gas (310) in transport direction (T) thereby advancing movement of the analyte (320) in the transport direction (T),
- guiding (2500) the pre-concentrated analyte (320) through a column (140) being equipped with a stationary phase (141) in the transport direction (T),
- carrying (2600) the analyte (320) carried by the carrier gas (310) through a gas detector (150), and
- detecting (2700) the volatile organic compounds (VOC) separated by the column (140) by the gas detector (150).
